# EUROPEAN PATENT SPECIFICATION

(11) **EP 4 301 492 B1**
(45) Date of publication and mention of the grant of the patent: **09.07.2025**
(21) Application number: 22710365.2
(22) Date of filing: 02.03.2022
(51) Int. Cl.: B01D 53/14

(54) **METHOD AND SYSTEM FOR TREATING A STEAM CONDENSATE GENERATED BY A HIGH-PRESSURE GENERATOR OF A CARBON DIOXIDE ABSORPTION SOLUTION**
VERFAHREN UND SYSTEM ZUR BEHANDLUNG EINES VON EINEM HOCHDRUCKERZEUGER EINER KOHLENDIOXIDABSORPTIONSLÖSUNG ERZEUGTEN DAMPFKONDENSATS
PROCÉDÉ ET SYSTÈME DE TRAITEMENT DE CONDENSAT DE VAPEUR GÉNÉRÉ PAR UN GÉNÉRATEUR HAUTE PRESSION D'UNE SOLUTION D'ABSORPTION DE DIOXYDE DE CARBONE

(30) Priority: 02.03.2021 IN 202111008669; 06.05.2021 EP 21172485
(43) Date of publication of application: 10.01.2024
(73) Proprietor: Yara International ASA, 0277 Oslo (NO)
(72) Inventor: SINGH, Udaypal, District-Sambhal (Uttar Pradesh) (IN)
(74) Representative: De Clercq & Partners
(86) International application number: PCT/EP2022/055204
(87) International publication number: WO 2022/184743

(56) References cited:
- CN-A- 107 866 134
- DE-A1- 102018 210 921
- US-A- 3 441 393

## Description

### Field of the disclosure

The present disclosure relates to a method and a system for carbon dioxide absorption, in particular to a method and system for treating a steam condensate generated by a high-pressure generator for the regeneration of a carbon dioxide absorption solution.

### Background

Carbon dioxide has many uses. For example, carbon dioxide is used to produce urea, to carbonate beverages, to chill, freeze and package seafood, meat, poultry, baked goods, fruits, and vegetables, and to extend the shelf-life of dairy products. It is an important environmental component in industrial waste and process water treatment as a replacement for sulfuric acid to control pH levels. Other uses include drinking water treatment, an environmentally friendly pesticide, and an atmosphere additive in greenhouses to improve the growth of vegetables.

In general, carbon dioxide is produced by purifying a waste stream which is a by-product of an organic or inorganic chemical process. The waste stream, which comprises a high concentration of carbon dioxide, is condensed and purified in multiple stages and then distilled to produce the product grade carbon dioxide.

Upgrading of the carbon dioxide concentration in a feed can be carried out in a number of ways. One particularly preferred method is the chemical absorption of carbon dioxide from the crude carbon dioxide feed into an alkanolamine based absorbent. The resulting carbon dioxide loaded absorbent then undergoes separation into a carbon dioxide product for recovery and into alkanolamine containing absorbent which may be recycled for reuse within the recovery system.

The recovery of carbon dioxide is particularly important in the ammonia process in order to separate hydrogen from carbon dioxide, in the mixture of hydrogen and carbon dioxide produced by the shift conversion unit: hydrogen cannot be used in an ammonia converter, for the production of ammonia, unless it is essentially free of carbon dioxide.

In GB996543A, it is described how a carbon dioxide containing gas is scrubbed with an aqueous solution of an alkanolamine in a tower (18), wherein the solution having absorbed carbon dioxide is withdrawn from the tower (18), and is regenerated in a tower (32), being heated indirectly by the steam from the waste-heat boiler (2) and stripped by steam from the waste-heat boiler (9).

In DE102018210921A1, a unit and a related process for the production of hydrogencontaining synthesis gas it is described, at least comprising (a) a reformer (1); (b) a carbon monoxide (CO) converter (2); (c) a synthesis gas condenser (4); (d) a carbon dioxide (CO₂) scrubber unit with regeneration (3); characterized in that the synthesis gas condenser (4) is connected to a deaerator (5) and the deaerator (5) is connected to a reformer burner (6) and/or a fired auxiliary steam boiler (7).

In CN107866134A, it is disclosed providing heat to a regenerator operating under reflux conditions of the solution to be regenerated, and also heating the solution to be treated in the regenerator with a rich and lean solution and also with heat from the CO₂/steam mixture produced inside the regenerator. Further, the steam condensate achieved after heat has been supplied to the regenerator is heated with steam.

US 3 441 393 discloses a CO2 absorber and a connected regenerator for CO2 absorbent which is connected to a heat exchanger/reboiler, which is heated by low-pressure steam at about 50 psig (about 3.5 kg/cm2) and which is fed with absorbent at about 15 psig (about 1.05 kg/cm2), and steam condensate is directly fed from the heat exchanger/reboiler to the deaerator, which supplies boiler feed water to the boiler, to drive a turbine, from which the low-pressure steam is supplied to the heat exchanger/reboiler.

Hence, the prior art describes the regeneration of a carbon dioxide absorbing solution by heating with steam and the condensation of a synthesis gas and its subsequent processing in a de-aerator. The prior art does not provide teaching as to how the condensate from the steam used to regenerate a solution having absorbed carbon dioxide is to be treated.

Regenerating the steam used to regenerate a solution having absorbed carbon dioxide is important from an energy recovery perspective and should be performed in an energy-efficient manner. At the same time, the process condensate generated from the use of steam should be treated and used for regenerating steam in such a manner that the equipment in the unit is not subjected to corrosion.

The present disclosure provides a method and a system for utilizing the complete heat content of a steam condensate generated by a high-pressure regenerator, at the same time as ensuring that the equipment in the unit is not subjected to corrosion.

### Summary

In one aspect of the disclosure, a method is disclosed for treating a steam condensate generated by a high-pressure regenerator operating at a pressure ranging from 1.0 to 1.2 kg/cm² for regenerating a carbon dioxide absorption solution. The method comprises the steps a) to d) according to claim 1.

Surprisingly, the inventors have found that the method of the disclosure allows for utilizing the complete heat content of the steam condensate generated by the high-pressure regenerator, at the same time as ensuring that the equipment in the unit is not subjected to corrosion since it is energy-efficiently processed in the de-aerator. Further, the use of the low-pressure steam used for supplying the high-pressure regenerator results in the maximum heat content of the steam being used, such that energy recovery is maximised in the system.

In one embodiment according to the method of the disclosure, the aqueous solution suitable for producing steam has an oxygen content ranging from 7 ppb to less than 20 ppb.

In one embodiment according to the method of the disclosure, the method further comprises the step of
e) re-using the regenerated carbon dioxide absorption solution produced in step c) for absorbing additional carbon dioxide in the carbon dioxide absorption unit.

In one embodiment according to the method of the disclosure, the carbon dioxide absorption solution comprises about 30% potassium carbonate, optionally partly or completely converted to potassium bicarbonate.

In one embodiment according to the method of the disclosure, the carbon dioxide absorption solution comprises about 30% potassium carbonate, about 5% potassium bicarbonate, about 0.5% diethanolamine and about 0.5% glycine.

In one embodiment according to the method of the disclosure, the method further comprises the step of:
f) producing steam from the aqueous solution produced by step d).

In one embodiment according to the method of the disclosure, the method further comprises the steps of:
g) removing sulfur from a feed of natural gas in a sulfur removal unit for producing a feed of natural gas essentially free of sulfur;
h) converting the feed of natural gas essentially free of sulfur obtained in step g), using steam, into a mixture of carbon monoxide and hydrogen in a primary reformer;
i) optionally, increasing the conversion of the feed of natural gas essentially free in sulfur, using oxygen, into a mixture of carbon monoxide and hydrogen achieved in the primary reformer in step h), in a secondary reformer;
j) converting the mixture of carbon monoxide and hydrogen obtained in step h), or optionally in step i), into a mixture of carbon dioxide and hydrogen in a shift conversion unit; and
k) feeding the gaseous mixture of carbon dioxide and hydrogen generated in step j) to the carbon dioxide absorption unit, thereby producing hydrogen essentially free in carbon dioxide; and
I) feeding the hydrogen produced in step k) to a methanation unit for converting remaining amounts of carbon monoxide and carbon dioxide into methane.

In one embodiment according to the method of the disclosure, the method further comprises the step of:
m) feeding the mixture of hydrogen and methane obtained from step I) to an ammonia converter for producing ammonia.

In another aspect of the disclosure, a system is disclosed for recovering the heat content of a steam condensate generated by a high-pressure regenerator operable at a pressure ranging from 1.0 to 1.2 kg/cm² for regenerating a carbon dioxide absorption solution. The system is disclosed in claim 9.

In one embodiment according to the system of the disclosure, the system further comprises means for recycling the regenerated carbon dioxide absorption solution regenerated in the high-pressure regenerator.

In one embodiment according to the system of the disclosure, the system further comprises means for producing steam with an oxygen content ranging from 7 ppb to less than 20 ppb from the aqueous solution produced in the de-aerator, wherein the means for producing steam are in direct fluid communication with the de-aerator.

In one embodiment according to the system of the disclosure, the system is the front end of an ammonia production unit and further comprises:
- a sulfur removal unit for removing sulfur from a feed of natural gas;
- a primary reformer for converting a feed of natural gas essentially free of sulfur into a mixture of carbon monoxide and hydrogen;
- optionally, a secondary reformer for increasing the conversion of the feed of natural gas essentially free of sulfur into a mixture of carbon monoxide and hydrogen achieved in the primary reformer; and
- a shift conversion unit for converting the mixture of carbon monoxide and hydrogen produced in the primary reformer or, optionally, in the secondary reformer;
wherein:
- the sulfur removal unit is in direct fluid communication with the primary reformer;
- the primary reformer is in direct fluid communication with the shift conversion unit in the absence of a secondary reformer and is in direct fluid communication with the secondary reformer when a secondary reformer is present;
- the secondary reformer, when present, is in direct fluid communication with the shift conversion unit;
- the shift conversion unit is in direct fluid communication with the carbon dioxide absorption unit; and
- a methanation unit for converting remaining amounts of carbon monoxide and carbon dioxide into methane, wherein the methanation unit is in direct fluid communication with the shift conversion unit.

In one embodiment according to the system of the disclosure, the front end is fluidly connected to an ammonia converter for producing ammonia.

In another aspect of the disclosure, the use of the system for recovering heat of the disclosure for performing the method for recovering heat of the disclosure is disclosed.

In another aspect of the disclosure, a method for revamping a system for recovering heat is disclosed in claim 15.

### List of Figures

**Figure** 1 show a schematic representation of the new process of the disclosure and the differences with a conventional system from the prior art.
**Figure 2** show a schematic representation of an ammonia production process in which the process of the disclosure can be integrated.

### List of numerals in Figures

| | |
|---|---|
| **11** | sulfur removal unit |
| **19** | primary reformer |
| **24** | shift conversion unit |
| **28** | carbon dioxide removal unit |
| **32** | methanation unit |
| **36** | ammonia synthesis unit, also referred to herein as ammonia converter |
| **53** | secondary reformer |
| **56** | carbon dioxide absorption unit |
| **57** | high-pressure regenerator |
| **58** | steam-fired reboiler |
| **59** | de-aerator |
| **60** | inlet of steam-fired reboiler |
| **61** | outlet of steam-fired reboiler |
| **62** | means for producing steam |
| **63** | Process condensate stripper |
| **64** | water demineralisation unit |
| **65** | Inlet of the process condensate stripper |
| **66** | Outlet of the process condensate stripper |
| **67** | Inlet of the demineralisation |
| **68** | Outlet of the demineralisation unit |
| **69** | Inlet of the deaerator |
| **70** | Outlet of the deaerator |
| **71** | Ammonia production unit |

### Detailed description

Before the present system and method of the disclosure are described, it is to be understood that this disclosure is not limited to particular systems and methods or combinations described, since such systems and methods and combinations may, of course, vary. It is also to be understood that the terminology used herein is not intended to be limiting, since the scope of the present disclosure will be limited only by the appended claims.

As used herein, the singular forms "a", "an", and "the" include both singular and plural referents unless the context clearly dictates otherwise.
The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

The enumeration of numeric values by means of ranges of figures comprises all values and fractions in these ranges, as well as the cited end points. The term "from ... to ..." as used when referring to a range for a measurable value, such as a parameter, an amount, a time period, and the like, is intended to include the limits associated to the range that is disclosed.

The term "about" or "approximately" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed disclosure. It is to be understood that the value to which the modifier "about" or "approximately" refers is itself also specifically, and preferably, disclosed.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

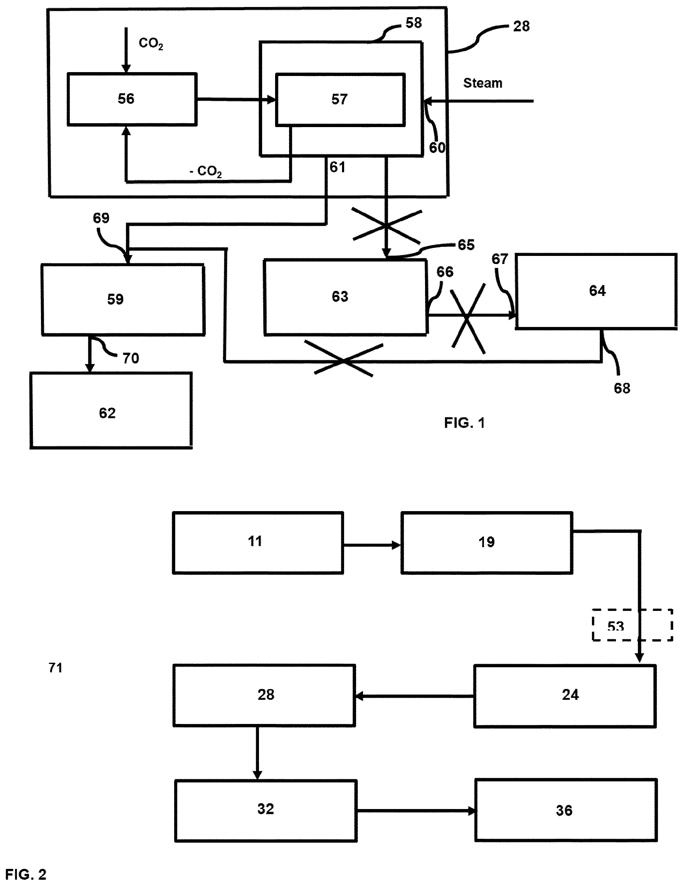

Reference is made to Figure 1. In one aspect of the disclosure, a method is disclosed for treating of a steam condensate generated by a high-pressure regenerator (57) for regenerating a carbon dioxide absorption solution. A high-pressure regenerator is herein defined as a regenerator operating at a pressure ranging from 1.0 kg/cm² to 1.2 kg/cm². The method comprises the steps of: a) capturing carbon dioxide in a carbon dioxide absorption (56) unit using a carbon dioxide absorption solution; b) feeding the carbon dioxide absorption solution comprising absorbed carbon dioxide and generated in step a) to the high-pressure regenerator (57); and c) supplying low-pressure steam, that is steam at a pressure ranging from 3.2 kg/cm² to 3.5 kg/cm², to a steam-fired reboiler (58) for supplying heat to the high-pressure regenerator (57), thereby producing a steam condensate and a regenerated carbon dioxide absorption solution; and is characterised in that it further comprises the step of: d) supplying the steam condensate produced in step c) to a de-aerator **(59),** thereby producing an aqueous solution suitable for producing steam with an oxygen content lower than 20 ppb.

As defined herein, a carbon dioxide absorption unit is any unit in which gaseous carbon dioxide from a mixture of gases is absorbed in a liquid, the so-called carbon dioxide absorption solution. As a result of this absorption, a carbon dioxide absorption solution comprising absorbed carbon dioxide is generated and the mixture of gases from which carbon dioxide has been separated is, therefore, purified from carbon dioxide. As it is economically interesting to re-use the carbon dioxide solution, a technical solution is required in order to regenerate the solution after it has absorbed carbon dioxide. Said otherwise, there is a need for desorbing the carbon dioxide after it has been absorbed such that the carbon dioxide absorption solution is regenerated and has the capacity to absorb additional carbon dioxide. The desorbed carbon dioxide can, for example, be utilised in processes consuming carbon dioxide, such as urea production.

In the method of the invention, the carbon dioxide is regenerated by heating the solution comprising absorbed carbon dioxide in a heat exchange system. A heat exchange system comprising a high-pressure regenerator **(57)** comprising the solution to be regenerated, and a steam-fired reboiler **(58)** exchanging steam to the solution, is used as such heat-exchange system. As a result of the heat exchange process, the carbon dioxide absorbed in the solution to be regenerated is evaporated and the solution is, therefore, suitable for being re-used in the carbon dioxide absorption unit **(56).** On the side of the reboiler **(58),** after the heat exchange of steam, a process condensate is produced. In particular, in the context of the present application, in such heat-exchange system, in the reboiler **(58),** the carbon dioxide containing solution to be regenerated is heated and the low pressure steam is condensed to liquid. The condensation of the low-pressure steam thus contributes to the heat required for regeneration of the carbon dioxide absorption solution and the evaporation of the carbon dioxide in the high-pressure regenerator **(57).** In the method of the invention, , the regenerated carbon dioxide absorption solution exiting the high-pressure regenerator is further treated in a low-pressure regenerator (not shown), typically operating at a pressure below 0.2 kg/cm², such as at a pressure of about 0.1 kg/cm², to further evaporate and remove carbon dioxide from the carbon dioxide absorption solution before the latter is reused in the CO₂ absorption tower.

Typically, in prior art systems, the process condensate is processed in a process condensate stripper **(63)** for stripping any gas. In the stripper, the condensate to be stripped comes in contact with steam and the gases dissolved in the condensate are stripped, such that water of a suitable gas content is recovered and can be used for producing additional steam. Typically, the stripped condensate is subsequently treated in a water demineralisation unit **(64)** to further purify the water before it is used for producing steam. In addition, the demineralised water then needs to be treated in a de-aerator in order to reduce the oxygen content to levels below 20 ppb: this reduction of the level of oxygen is necessary in order to prevent the corrosion of the equipment in which steam is generated from water and subsequently used for exchanging heat.

The presence and the use associated to the presence of a process condensate stripper **(63)** and of a water demineralisation unit **(64)** imply high energy consumption. The inventors of the present disclosure have established that the presence of such process condensate stripper and demineralisation unit **(64)** is not necessary for processing the condensate generated in the steam-fired reboiler **(58).** Instead of processing the process condensate from the steam-fired reboiler **(58)** through a process condensate stripper **(63)** and a water demineralisation unit **(64),** the process condensate can be sent directly to the de-aerator. In this manner, energy is not only saved by avoiding the actual chemical treatment of the process condensate in the process condensate stripper **(63)** and in the water demineralisation unit **(64),** but also by avoiding the pumping of an equivalent amount of demineralised water to the de-aerator **(59).** All that is necessary is to supply the process condensate directly to the de-aerator **(59),** in particular via a direct connection between the reboiler **(58)** and de-aerator **(59),** by connecting the process condensate outlet **(61)** of the reboiler **(58)** to the inlet **(69)** of the de-aerator **(59).** As a result, the equipment in the process is greatly simplified, the footprint of the system is greatly reduced, thereby reducing the costs associated to the system and to its operation. Further, the use of the low-pressure steam and its condensation to liquid results in the maximum heat content of the steam being used for supplying heat to the high pressure regenerator **(57),** such that energy recovery is maximised in the system.

In one embodiment according to the method of the disclosure, the aqueous solution suitable for producing steam obtained in step d) has an oxygen content ranging from 7 ppb to less than 20 ppb.

In one embodiment according to the method of the disclosure, the method further comprises the step e) of re-using the regenerated carbon dioxide absorption solution produced in step c) for absorbing additional carbon dioxide in the carbon dioxide absorption unit **(56).** As described above, this allows for the reduction of the amount of absorption solution to be used for absorbing a defined quantity of carbon dioxide.

In one embodiment according to the method of the disclosure, the carbon dioxide absorption solution comprises about 30% potassium carbonate, optionally partly or completely converted to potassium bicarbonate.

In one embodiment according to the method of the disclosure, the carbon dioxide absorption solution comprises about 30% potassium carbonate, about 5% potassium bicarbonate, about 0.5% diethanolamine and about 0.5% glycine.

In one embodiment according to the method of the disclosure, the method further comprises the step of f) producing steam from the aqueous solution produced by step d). By using water with a content in oxygen lower than 20 ppb, particularly ranging from 7 ppb to 20 ppb, steam can be produced and can be being supplied, for example, to the steam-fired reboiler **(58)** for regenerating an additional quantity of a carbon dioxide absorption solution comprising absorbed carbon dioxide, in the high-pressure regenerator **(57).**

Reference is made to Figure 2. In one embodiment according to the method of the disclosure, the method is performed in the front end (or the hydrogen production section) of an ammonia production unit **(71)** and further comprises the steps of g) removing sulfur from a feed of natural gas in a sulfur removal unit **(11)** for producing a feed of natural gas essentially free of sulfur; h) converting the feed of natural gas essentially free of sulfur obtained in step g), using steam, into a mixture of carbon monoxide and hydrogen in a primary reformer **(19);** i) optionally, increasing the conversion of the feed of natural gas essentially free in sulfur, using oxygen, into a mixture of carbon monoxide and hydrogen achieved in the primary reformer **(19)** in step h), in a secondary reformer **(53);** j) converting the mixture of carbon monoxide and hydrogen obtained in step h), or optionally in step i), into a mixture of carbon dioxide and hydrogen in a shift conversion unit **(24);** k) feeding the gaseous mixture of carbon dioxide and hydrogen generated in step j) to the carbon dioxide absorption unit **(56),** thereby producing hydrogen essentially free in carbon dioxide; and l) feeding the hydrogen produced in step k) to a methanation unit **(32)** for converting remaining amounts of carbon monoxide and carbon dioxide into methane.

Hence, the disclosure provides for the possibility to apply the method of the disclosure to the carbon dioxide removal unit **(28)** in the "front end", that is the hydrogen production section, of an ammonia production system **(71).**

In one embodiment according to the method of the disclosure, the method further comprises the steps of m) feeding the mixture of hydrogen and methane obtained from step I) to an ammonia converter **(36).**

Hence, the disclosure not only provides for the possibility to apply the method of the disclosure to the carbon dioxide removal unit **(28)** in the "front end", that is the hydrogen production section, of an ammonia production system, it further allows for the reaction of the produced hydrogen with nitrogen in an ammonia converter. Ammonia can, therefore, be produced while energy is saved from the carbon dioxide removal unit **(28).**

Reference is made to Figure 1. In another aspect of the disclosure, a system is disclosed for recovering the heat of a steam condensate generated by a high-pressure regenerator **(57)** operable at a pressure ranging from 1.0 to 1.2 kg/cm² for regenerating a carbon dioxide absorption solution. The system comprises a de-aerator **(59)** for producing an aqueous solution with an oxygen content lower than 20 ppb, particularly with an oxygen content ranging from 7 ppb to 20 ppb, comprising an inlet and an outlet; and a carbon dioxide removal unit **(28)** comprising a carbon dioxide absorption unit **(56);** the high-pressure regenerator **(57)** for regenerating a carbon dioxide absorption solution comprising absorbed carbon dioxide; and a steam-fired reboiler **(58)** comprising an inlet **(60)** for supplying heat at a pressure ranging from 3.2 to 3.5 kg/cm² to the high-pressure regenerator **(57)** and an outlet **(61)** for a steam condensate, produced by the exchange of the heat of the steam in the steam-fired reboiler with the high-pressure regenerator, such as by the exchange of the heat of the steam in the steam-fired reboiler with the carbon dioxide absorption solution comprising absorbed carbon dioxide; and is characterised in that the inlet **(60)** of the de-aerator **(59)** is in direct fluid communication with the outlet **(61)** of the steam-fired reboiler **(58).** Stated differently, the inlet **(60)** of the de-aerator **(59)** is connected to the outlet **(61)** of the steam-fired reboiler **(58).**

As described above in conjunction with the method developed, the inventors of the present disclosure have established that the presence of a process condensate stripper **(63)** and demineralisation unit **(64)** is not necessary for processing the condensate generated in the steam-fired reboiler. Since, instead of processing the process condensate from the steam-fired reboiler **(58)** through a process condensate stripper **(63)** and a water demineralisation unit **(64),** the process condensate can be sent directly to the de-aerator, the equipment in the process is greatly simplified, the footprint of the system is greatly reduced, thereby reducing the costs associated to the system. Further, the use of the low-pressure steam and its condensation to liquid results in the maximum heat content of the steam being used for supplying heat to the high-pressure regenerator **(57),** such that energy recovery is maximised in the system.

In certain embodiments, the system further comprises a low-pressure regenerator (not shown) positioned downstream of the high-pressure regenerator **(57),** for further removal of CO₂ from the regenerated carbon dioxide absorption solution.

In one embodiment according to the system of the disclosure, the system further comprises means for recycling the regenerated carbon dioxide absorption solution regenerated in the high-pressure regenerator **(57)** or the low-pressure regenerator. Such a system allows for, as described above, subsequently re-using the regenerated carbon dioxide absorption solution produced in step a) for absorbing additional carbon dioxide in the carbon dioxide absorption unit **(56).** Therefore, this system allows for the reduction of the amount of absorption solution to be used for absorbing a defined quantity of carbon dioxide.

In one embodiment according to the system of the disclosure, the system further comprises means for producing steam **(62)** with an oxygen content ranging from 7 ppb to less than 20 ppb from the aqueous solution produced in the de-aerator **(59),** wherein the means for producing steam **(62)** are in direct fluid communication with the de-aerator **(59).**

Reference is made to Figure 2. In one embodiment according to the system of the disclosure, the system is the front end or the hydrogen production section of an ammonia production unit **(71)** and further comprises a sulfur removal unit **(11)** for removing sulfur from a feed of natural gas; a primary reformer **(19)** for converting a feed of natural gas essentially free of sulfur into a mixture of carbon monoxide and hydrogen; optionally, a secondary reformer **(53)** for increasing the conversion of the feed of natural gas essentially free of sulfur into a mixture of carbon monoxide and hydrogen achieved in the primary reformer **(19);** a shift conversion unit **(24)** for converting the mixture of carbon monoxide and hydrogen produced in the primary reformer **(19)** or, optionally, in the secondary reformer **(53);** and a methanation unit **(32)** for converting remaining amounts of carbon monoxide and carbon dioxide into methane ; wherein the sulfur removal unit **(11)** is in direct fluid communication with the primary reformer **(19);** the primary reformer **(19)** is in direct fluid communication with the shift conversion unit **(24)** in the absence of a secondary reformer **(53)** and is in direct fluid communication with the secondary reformer when a secondary reformer **(53)** is present; the secondary reformer **(53),** when present, is in direct fluid communication with the shift conversion unit **(24);** the shift conversion unit **(24)** is in direct fluid communication with the carbon dioxide absorption unit **(56);** and the methanation unit **(32)** is in direct fluid communication with the shift conversion unit **(24).**

Hence, the disclosure not only provides for a carbon dioxide removal unit **(28),** it provides a "front end", that is a hydrogen production section, of an ammonia production system.

In one embodiment according to the system of the disclosure, the system further comprises an ammonia converter **(36)** in direct fluid communication with the methanation unit **(32).**

Hence, the disclosure not only provides for a carbon dioxide removal unit **(28)** and a "front end", that is the hydrogen production section, of an ammonia production system, it further provides an ammonia converter for reacting of the produced hydrogen with nitrogen in an ammonia converter. Ammonia can, therefore, be produced while energy is saved from the carbon dioxide removal unit **(28).**

In another aspect of the disclosure, the use of the system for recovering heat of the disclosure for performing the method for recovering heat of the disclosure is disclosed.

Reference is made to Figure 1. In another aspect of the disclosure, a method for revamping an existing system comprising a process condensate stripper **(63)** for stripping the condensate produced by the steam-fired reboiler **(58)** comprising an inlet **(65)** in direct fluid communication with the outlet **(61)** of the steam-fired reboiler **(58)** and an outlet **(66);** a water demineralisation unit **(64)** comprising an inlet **(67)** in direct fluid communication with the outlet **(66)** of the process condensate stripper **(63)** and an outlet **(68);** a de-aerator **(59)** for producing an aqueous solution with an oxygen content lower than 20 ppb comprising an inlet **(69)** in direct fluid communication with the outlet **(68)** of the water demineralisation unit **(64)** and an outlet **(70);** a carbon dioxide removal unit **(28)** comprising a carbon dioxide absorption unit **(56);** a high-pressure regenerator **(57)** for regenerating a carbon dioxide absorption solution comprising absorbed carbon dioxide; and a steam-fired reboiler **(58)** comprising an inlet **(60)** and an outlet **(61),** for supplying heat to the high-pressure regenerator **(57),** thereby producing a steam condensate and a regenerated carbon dioxide absorption solution; into a system according to the present disclosure is disclosed.

The method for revamping comprises the steps of (I) fluidly deconnecting the outlet **(61)** of the steam-fired reboiler **(58)** from the inlet **(65)** of the process condensate stripper **(63);** (II) fluidly deconnecting the inlet **(67)** water demineralisation unit **(64)** from the outlet **(66)** of the process condensate stripper **(63);** and (III) fluidly connecting the outlet **(61)** of steam-fired reboiler **(58)** to the inlet **(69)** of the de-aerator **(59).**

By performing such revamping method, this is possible to convert the system according to the state of the art into the system of the disclosure, thereby, as described in conjunction with the system of the disclosure, removing the process condensate stripper **(63)** and the water demineralisation unit **(64).** As a result, the equipment in the process is greatly simplified, the footprint of the system is greatly reduced, thereby reducing the costs associated to the system.

## Claims

1. A method for treating a steam condensate generated by a high-pressure regenerator (57) operating at a pressure ranging from 1.0 to 1.2 kg/cm² for regenerating a carbon dioxide absorption solution comprising the steps of:
a) capturing carbon dioxide in a carbon dioxide absorption (56) unit using a carbon dioxide absorption solution;
b) feeding the carbon dioxide absorption solution comprising absorbed carbon dioxide and generated in step a) to the high-pressure regenerator (57) of a heat exchange system comprising the high-pressure regenerator (57) comprising the solution to be regenerated and a steam-fired reboiler (58); and
c) supplying low-pressure steam at a pressure ranging from 3.2 to 3.5 kg/cm² to a steam-fired reboiler (58) for supplying heat to the high-pressure regenerator (57), wherein, in the steam-fired reboiler, by the exchange of the heat of the steam with the carbon dioxide absorption solution comprising absorbed carbon dioxide, the carbon dioxide absorption solution comprising absorbed carbon dioxide is heated, thereby producing a steam condensate and a regenerated carbon dioxide absorption solution; wherein the regenerated carbon dioxide absorption solution exiting the high-pressure regenerator is further treated in a low-pressure regenerator operating at a pressure below 0.2 kg/cm²;
wherein the method further comprises the step of:
d) directly supplying the steam condensate produced in step c) to the de-aerator (59), thereby producing an aqueous solution suitable for producing steam with an oxygen content lower than 20 ppb.

2. The method according to claim 1, wherein the aqueous solution suitable for producing steam has an oxygen content ranging from 7 ppb to less than 20 ppb.

3. The method according to any one of claims 1 to 2, further comprising the step of:
e) re-using the regenerated carbon dioxide absorption solution produced in step c) for absorbing additional carbon dioxide in the carbon dioxide absorption unit (56).

4. The method according to any one of claims 1 to 3, further comprising the step of:
f) producing steam from the aqueous solution produced by step d).

5. The method according to any one of claims 1 to 4, wherein the carbon dioxide absorption solution comprises about 30% potassium carbonate, optionally partly or completely converted to potassium bicarbonate.

6. The method according to claim 5, wherein the carbon dioxide absorption solution comprises about 30% potassium carbonate, about 5% potassium bicarbonate, about 0.5% diethanolamine and about 0.5% glycine.

7. The method according to any one of claims 1 to 6, further comprising the steps of:
g) removing sulfur from a feed of natural gas in a sulfur removal unit (11) for producing a feed of natural gas essentially free of sulfur;
h) converting the feed of natural gas essentially free of sulfur obtained in step g), using steam, into a mixture of carbon monoxide and hydrogen a primary reformer (19);
i) optionally, increasing the conversion of the feed of natural gas essentially free in sulfur, using oxygen, into a mixture of carbon monoxide and hydrogen achieved in the primary reformer (19) in step h), in a secondary reformer (53);
j) converting the mixture of carbon monoxide and hydrogen obtained in step h), or optionally in step i), into a mixture of carbon dioxide and hydrogen in a shift conversion unit (24);
k) feeding the gaseous mixture of carbon dioxide and hydrogen generated in step j) to the carbon dioxide absorption unit (56), thereby producing hydrogen essentially free in carbon dioxide; and
I) feeding the hydrogen produced in step k) to a methanation unit (32) for converting remaining amounts of carbon monoxide and carbon dioxide into methane.

8. The method according to claim 7, further comprising the step of:
m) feeding the mixture of hydrogen and methane obtained from step I) to an ammonia converter (36).

9. A system for treating of a steam condensate generated by a high-pressure regenerator for regenerating a carbon dioxide absorption solution, comprising:
a carbon dioxide removal unit (28) comprising:
a carbon dioxide absorption unit (56);
a heat exchange system comprising a high-pressure regenerator (57) comprising the solution to be regenerated and a steam-fired reboiler (58) for exchange of the heat of the steam in the steam-fired reboiler (58) with the carbon dioxide absorption solution comprising absorbed carbon dioxide in the high-pressure regenerator (57);
a low-pressure regenerator; and
a de-aerator (59) for producing an aqueous solution with an oxygen content lower than 20 ppb, comprising an inlet and an outlet,
wherein the high-pressure regenerator (57) is operable at a pressure ranging from 1.0 to 1.2 kg/cm² for regenerating a carbon dioxide absorption solution comprising absorbed carbon dioxide;
wherein the low-pressure regenerator is operably at a pressure below below 0.2 kg/cm² for treating the regenerated carbon dioxide exiting the high-pressure regenerator (57);
wherein the steam-fired reboiler (58) comprises an inlet (60) for supplying low-pressure steam at a pressure ranging from 3.2 to 3.5 kg/cm² to the high-pressure regenerator (57) and an outlet (61) for a steam condensate, produced by the exchange of the heat of the steam in the steam-fired reboiler with the high-pressure regenerator; and
wherein the inlet (60) of the de-aerator (59) is in direct fluid communication with the outlet (61) of the steam-fired reboiler (58).

10. The system according to claim 9, further comprising means for recycling the regenerated carbon dioxide absorption solution regenerated in the high-pressure regenerator (57).

11. The system according to any one of claims 9 to 10, further comprising means for producing steam (62) with an oxygen content ranging from 7 ppb to less than 20 ppb from the aqueous solution produced in the de-aerator (59), wherein the means for producing steam (62) are in direct fluid communication with the de-aerator (59).

12. The system according to any one of claims 9 to 11, wherein the system is the hydrogen production section of an ammonia production unit (71), further comprising:
a sulfur removal unit (11) for removing sulfur from a feed of natural gas;
a primary reformer (19) for converting a feed of natural gas essentially free of sulfur into a mixture of carbon monoxide and hydrogen;
optionally, a secondary reformer (53) for increasing the conversion of the feed of natural gas essentially free of sulfur into a mixture of carbon monoxide and hydrogen achieved in the primary reformer (19); and
a shift conversion unit (24) for converting the mixture of carbon monoxide and hydrogen produced in the primary reformer (19) or, optionally, in the secondary reformer (53); and
a methanation unit (32) for converting remaining amounts of carbon monoxide and carbon dioxide into methane;
wherein:
the sulfur removal unit (11) is in direct fluid communication with the primary reformer (19);
the primary reformer (19) is in direct fluid communication with the shift conversion unit (24) in the absence of a secondary reformer (53) and is in direct fluid communication with the secondary reformer when a secondary reformer (53) is present;
the secondary reformer (53), when present, is in direct fluid communication with the shift conversion unit (24); and
the shift conversion unit (24) is in direct fluid communication with the carbon dioxide absorption unit (56); and
the methanation unit (32) is in direct fluid communication with the shift conversion unit (24).

13. The system according to claim 12, further comprises an ammonia converter (36) in direct fluid communication with the methanation unit (32).

14. Use of the system for recovering heat according to any one of claims 9 to 13 in performing the method for recovering heat according to any one of claims 1 to 7.

15. A method for revamping an existing system for recovering heat comprising:
a carbon dioxide removal unit (28) comprising:
a carbon dioxide absorption unit (56);
a heat exchange system comprising a high-pressure regenerator (57) for regenerating a carbon dioxide absorption solution comprising absorbed carbon dioxide; and a steam-fired reboiler (58) comprises an inlet (60) and an outlet (61), for exchange of the heat of the steam in the steam-fired reboiler (58) with the carbon dioxide absorption solution comprising absorbed carbon dioxide in the high-pressure regenerator (57), thereby producing a steam condensate and a regenerated carbon dioxide absorption solution;
a low-regenerator, operable at a pressure below 0.2 kg/cm², for further treating the the regenerated carbon dioxide absorption solution exiting the high-pressure regenerator;
a process condensate stripper (63) for stripping the condensate produced by the steam-fired reboiler (58) comprising an inlet (65) in direct fluid communication with the outlet (61) of the steam-fired reboiler (58) and an outlet (66);
a water demineralisation unit (64) comprising an inlet (67) in direct fluid communication with the outlet (66) of the process condensate stripper (63) and an outlet (68); and
a de-aerator (59) for producing an aqueous solution with an oxygen content lower than 5 ppm, particularly lower than 20 ppb, comprising an inlet (69) in direct fluid communication with the outlet (68) of the water demineralisation unit (64) and an outlet (70);
into a system according to any one of claims 8 to 13, comprising the steps of:
(I) fluidly deconnecting the outlet (61) of the steam-fired reboiler (58) from the inlet (65) of the process condensate stripper (63);
(II) fluidly deconnecting the inlet (67) water demineralisation unit (64) from the outlet (66) of the process condensate stripper (63); and
(III) fluidly connecting the outlet (61) of steam-fired reboiler (58) to the inlet (69) of the de-aerator (59).

## Patentansprüche

1. Verfahren zum Behandeln eines Dampfkondensats, das von einem Hochdruckregenerator (57) erzeugt wird, der bei einem Druck im Bereich von 1,0 bis 1,2 kg/cm² arbeitet, zum Regenerieren einer Kohlendioxid-Absorptionslösung, die folgenden Schritte umfassend:
a) Abfangen von Kohlendioxid in einer Kohlendioxid-Absorptionseinheit (56) unter Verwendung einer Kohlendioxid-Absorptionslösung;
b) Zuführen der Kohlendioxid-Absorptionslösung, die absorbiertes Kohlendioxid umfasst und in Schritt a) erzeugt wird, zu dem Hochdruckregenerator (57) eines Wärmetauschsystems, das den Hochdruckregenerator (57), der die Lösung, die regeneriert werden soll, und einen dampfbefeuerten Reboiler (58) umfasst; und
c) Zuführen von Niederdruckdampf bei einem Druck im Bereich von 3,2 bis 3,5 kg/cm² zu einem dampfbefeuerten Reboiler (58) zum Zuführen von Wärme zu dem Hochdruckregenerator (57), wobei in dem dampfbefeuerten Reboiler durch den Austausch der Wärme des Dampfs mit der Kohlendioxid-Absorptionslösung, die absorbiertes Kohlendioxid umfasst, die Kohlendioxid-Absorptionslösung, die absorbiertes Kohlendioxid umfasst, erhitzt wird, wodurch ein Dampfkondensat und eine regenerierte Kohlendioxid-Absorptionslösung erzeugt werden; wobei die regenerierte Kohlendioxid-Absorptionslösung, die den Hochdruckregenerator verlässt, weiterhin in einem Niederdruckregenerator behandelt wird, der bei einem Druck unter 0,2 kg/cm² arbeitet;
wobei das Verfahren weiterhin den folgenden Schritt umfasst:
d) unmittelbares Zuführen des in Schritt c) erzeugten Dampfkondensats zu dem Entlüfter (59), wodurch eine wässrige Lösung erzeugt wird, die zum Erzeugen von Dampf mit einem Sauerstoff-Gehalt von weniger als 20 ppb geeignet ist.

2. Verfahren nach Anspruch 1, wobei die wässrige Lösung, die zum Erzeugen von Dampf geeignet ist, einen Sauerstoff-Gehalt im Bereich von 7 ppb bis weniger als 20 ppb aufweist.

3. Verfahren nach einem der Ansprüche 1 bis 2, weiterhin den folgenden Schritt umfassend:
e) Wiederverwenden der in Schritt c) erzeugten regenerierten Kohlendioxid-Absorptionslösung zum Absorbieren von zusätzlichem Kohlendioxid in der Kohlendioxid-Absorptionseinheit (56).

4. Verfahren nach einem der Ansprüche 1 bis 3, weiterhin den folgenden Schritt umfassend:
f) Erzeugen von Dampf aus der in Schritt d) erzeugten wässrigen Lösung.

5. Verfahren nach einem der Ansprüche 1 bis 4, wobei die Kohlendioxid-Absorptionslösung ungefähr 30 % Kaliumcarbonat umfasst, das gegebenenfalls teilweise oder vollständig in Kaliumbicarbonat umgewandelt ist.

6. Verfahren nach Anspruch 5, wobei die Kohlendioxid-Absorptionslösung ungefähr 30 % Kaliumcarbonat, ungefähr 5 % Kaliumbicarbonat, ungefähr 0,5 % Diethanolamin und ungefähr 0,5 % Glycin umfasst.

7. Verfahren nach einem der Ansprüche 1 bis 6, weiterhin die folgenden Schritte umfassend:
g) Entfernen von Schwefel aus einer Zufuhr von Erdgas in einer Schwefel-Entfernungseinheit (11), um eine Zufuhr von Erdgas zu erzeugen, das im Wesentlichen frei von Schwefel ist;
h) Umwandeln der in Schritt g) erlangten Zufuhr von Erdgas, das im Wesentlichen frei von Schwefel ist, unter Verwendung von Dampf in ein Gemisch aus Kohlenmonoxid und Wasserstoff in einem Primärreformer (19);
i) gegebenenfalls Erhöhen der Umwandlung der in Schritt h) im Primärreformer (19) erlangten Zufuhr von Erdgas, das im Wesentlichen frei von Schwefel ist, unter Verwendung von Sauerstoff in ein Gemisch aus Kohlenmonoxid und Wasserstoff in einem Sekundärreformer (53);
j) Umwandeln des in Schritt h) oder gegebenenfalls in Schritt i) erlangten Gemischs aus Kohlenmonoxid und Wasserstoff in ein Gemisch aus Kohlendioxid und Wasserstoff in einer Kohlenmonoxid-Konversionseinheit (24);
k) Zuführen des in Schritt j) erzeugten gasförmigen Gemischs aus Kohlendioxid und Wasserstoff zu der Kohlendioxid-Absorptionseinheit (56), wodurch Wasserstoff erzeugt wird, der im Wesentlichen frei von Kohlendioxid ist; und
I) Zuführen des in Schritt k) erzeugten Wasserstoffs zu einer Methanisierungseinheit (32) zum Umwandeln verbleibender Mengen Kohlenmonoxid und Kohlendioxid in Methan.

8. Verfahren nach Anspruch 7, weiterhin den folgenden Schritt umfassend:
m) Zuführen des in Schritt I) erlangten Gemischs aus Wasserstoff und Methan zu einem Ammoniak-Konverter (36).

9. System zum Behandeln eines Dampfkondensats, das von einem Hochdruckregenerator zum Regenerieren einer Kohlendioxid-Absorptionslösung erzeugt wird, Folgendes umfassend:
eine Kohlendioxid-Entfernungseinheit (28), Folgendes umfassend:
eine Kohlendioxid-Absorptionseinheit (56);
ein Wärmetauschsystem, das einen Hochdruckregenerator (57), der die Lösung umfasst, die regeneriert werden soll, und einen dampfbefeuerten Reboiler (58) zum Austausch der Wärme des Dampfs in dem dampfbefeuerten Reboiler (58) mit der Kohlendioxid-Absorptionslösung, die absorbiertes Kohlendioxid umfasst, in dem Hochdruckregenerator (57) umfasst;
einen Niederdruckregenerator; und
einen Entlüfter (59) zum Erzeugen einer wässrigen Lösung mit einem Sauerstoff-Gehalt von weniger als 20 ppb, einen Einlass und einen Auslass umfassend,
wobei der Hochdruckregenerator (57) bei einem Druck im Bereich von 1,0 bis 1,2 kg/cm² betriebsfähig ist, um eine Kohlendioxid-Absorptionslösung zu regenerieren, die absorbiertes Kohlendioxid umfasst;
wobei der Niederdruckregenerator bei einem Druck unter 0,2 kg/cm² betriebsfähig ist, um das regenerierte Kohlendioxid zu behandeln, das den Hochdruckregenerator (57) verlässt;
wobei der dampfbefeuerte Reboiler (58) einen Einlass (60) zum Zuführen von Niederdruckdampf bei einem Druck im Bereich von 3,2 bis 3,5 kg/cm² zu dem Hochdruckregenerator (57) und einen Auslass (61) für ein Dampfkondensat umfasst, das durch den Austausch der Wärme des Dampfs in dem dampfbefeuerten Reboiler mit dem Hochdruckregenerator erzeugt wird; und
wobei der Einlass (60) des Entlüfters (59) in unmittelbarer Fluidverbindung mit dem Auslass (61) des dampfbefeuerten Reboilers (58) ist.

10. System nach Anspruch 9, weiterhin Mittel zum Recyceln der regenerierten Kohlendioxid-Absorptionslösung umfassend, die in dem Hochdruckregenerator (57) regeneriert wurde.

11. System nach einem der Ansprüche 9 bis 10, weiterhin Mittel zum Erzeugen von Dampf (62) mit einem Sauerstoff-Gehalt im Bereich von 7 ppb bis weniger als 20 ppb aus der wässrigen Lösung umfassend, die in dem Entlüfter (59) erzeugt wurde, wobei die Mittel zum Erzeugen von Dampf (62) in unmittelbarer Fluidverbindung mit dem Entlüfter (59) sind.

12. System nach einem der Ansprüche 9 bis 11, wobei das System der Wasserstoff-Erzeugungsabschnitt einer Ammoniak-Erzeugungseinheit (71) ist, weiterhin Folgendes umfassend:
eine Schwefel-Entfernungseinheit (11) zum Entfernen von Schwefel aus einer Zufuhr von Erdgas;
einen Primärreformer (19) zum Umwandeln einer Zufuhr von Erdgas, das im Wesentlichen frei von Schwefel ist, in ein Gemisch aus Kohlenmonoxid und Wasserstoff;
gegebenenfalls einen Sekundärreformer (53) zum Erhöhen der im Primärreformer (19) erzielten Umwandlung der Zufuhr von Erdgas, das im Wesentlichen frei von Schwefel ist, in ein Gemisch aus Kohlenmonoxid und Wasserstoff; und
eine Kohlenmonoxid-Konversionseinheit (24) zum Umwandeln des im Primärreformer (19) oder gegebenenfalls im Sekundärreformer (53) erzeugten Gemischs aus Kohlenmonoxid und Wasserstoff in ein Gemisch aus Wasserstoff und Kohlendioxid;
eine Methanisierungseinheit (32) zum Umwandeln verbleibender Mengen Kohlenmonoxid und Kohlendioxid in Methan; und
wobei:
die Schwefel-Entfernungseinheit (11) in unmittelbarer Fluidverbindung mit dem Primärreformer (19) ist;
der Primärreformer (19) in Abwesenheit eines Sekundärreformers (53) in unmittelbarer Fluidverbindung mit der Kohlenmonoxid-Konversionseinheit (24) ist und in unmittelbarer Fluidverbindung mit dem Sekundärreformer ist, wenn ein Sekundärreformer (53) vorhanden ist;
der Sekundärreformer (53), wenn vorhanden, in unmittelbarer Fluidverbindung mit der Kohlenmonoxid-Konversionseinheit (24) ist; und
die Kohlenmonoxid-Konversionseinheit (24) in unmittelbarer Fluidverbindung mit der Kohlenmonoxid-Absorptionseinheit (56) ist; und
die Methanisierungseinheit (32) in unmittelbarer Fluidverbindung mit der Kohlenmonoxid-Konversionseinheit (24) ist.

13. System nach Anspruch 12, das weiterhin einen Ammoniak-Konverter (36) in unmittelbarer Fluidverbindung mit der Methanisierungseinheit (32) umfasst.

14. Verwenden des Systems zum Wärmerückgewinnen nach einem der Ansprüche 9 bis 13 beim Durchführen des Verfahrens zum Wärmerückgewinnen nach einem der Ansprüche 1 bis 7.

15. Verfahren zum Umrüsten eines vorhandenen Systems zum Rückgewinnen von Wärme, Folgendes umfassend:
eine Kohlendioxid-Entfernungseinheit (28), Folgendes umfassend:
eine Kohlendioxid-Absorptionseinheit (56);
ein Wärmetauschsystem, umfassend einen Hochdruckregenerator (57) zum Regenerieren einer Kohlendioxid-Absorptionslösung, die absorbiertes Kohlendioxid umfasst; und einen dampfbefeuerten Reboiler (58), der einen Einlass (60) und einen Auslass (61) umfasst, zum Austausch der Wärme des Dampfs in dem dampfbefeuerten Reboiler (58) mit der Kohlendioxid-Absorptionslösung, die absorbiertes Kohlendioxid umfasst, in dem Hochdruckregenerator (57), wodurch ein Dampfkondensat und eine regenerierte Kohlendioxid-Absorptionslösung erzeugt werden;
einen Niederdruckregenerator, der bei einem Druck unter 0,2 kg/cm² betriebsfähig ist, um die regenerierte Kohlendioxid-Absorptionslösung, die den Hochdruckregenerator verlässt, weiter zu behandeln;
einen Prozesskondensatstripper (63) zum Strippen des Kondensats, das von dem dampfbefeuerten Reboiler (58) erzeugt wurde, einen Einlass (65) in unmittelbarer Fluidverbindung mit dem Auslass (61) des dampfbefeuerten Reboilers (58) und einen Auslass (66) umfassend;
eine Wasserdemineralisierungseinheit (64), einen Einlass (67) in unmittelbarer Fluidverbindung mit dem Auslass (66) des Prozesskondensatstrippers (63) und einen Auslass (68) umfassend; und
einen Entlüfter (59) zum Erzeugen einer wässrigen Lösung mit einem Sauerstoff-Gehalt von weniger als 5 ppb, insbesondere weniger als 20 ppb, einen Einlass (69) in unmittelbarer Fluidverbindung mit dem Auslass (68) der Wasserdemineralisierungseinheit (64) und einen Auslass (70) umfassend;
in ein System nach einem der Ansprüche 8 bis 13, die folgenden Schritte umfassend:
(I) fluidisches Trennen des Auslasses (61) des dampfbefeuerten Reboilers (58) von dem Einlass (65) des Prozesskondensatstrippers (63);
(II) fluidisches Trennen des Einlasses (67) der Wasserdemineralisierungseinheit (64) von dem Auslass (66) des Prozesskondensatstrippers (63); und
(III) fluidisches Verbinden des Auslasses (61) des dampfbefeuerten Reboilers (58) mit dem Einlass (69) des Entlüfters (59).

## Revendications

1. Procédé de traitement d'un condensat de vapeur généré par un régénérateur à haute pression (57) fonctionnant à une pression dans la plage de 1,0 à 1,2 kg/cm² pour régénérer une solution d'absorption de dioxyde de carbone, comprenant les étapes de :
a) capture de dioxyde de carbone dans une unité d'absorption de dioxyde de carbone (56) à l'aide d'une solution d'absorption de dioxyde de carbone ;
b) alimentation de la solution d'absorption de dioxyde de carbone comprenant du dioxyde de carbone absorbé et généré dans l'étape a) au régénérateur à haute pression (57) d'un système d'échange de chaleur comprenant le régénérateur à haute pression (57) comprenant la solution devant être régénérée et un rebouilleur chauffé à la vapeur (58) ; et
c) fourniture de vapeur basse pression à une pression dans la plage de 3,2 à 3,5 kg/cm² à un rebouilleur chauffé à la vapeur (58) pour fournir de la chaleur au régénérateur à haute pression (57), dans lequel, dans le rebouilleur chauffé à la vapeur, par l'échange de la chaleur de la vapeur avec la solution d'absorption de dioxyde de carbone comprenant du dioxyde de carbone absorbé, la solution d'absorption de dioxyde de carbone comprenant du dioxyde de carbone absorbé étant chauffée, produisant ainsi un condensat de vapeur et une solution d'absorption de carbone régénérée ; dans lequel la solution d'absorption de dioxyde de carbone régénérée sortant du régénérateur à haute pression est traitée ultérieurement dans un régénérateur basse pression fonctionnant à une pression inférieure à 0,2 kg/cm² ;
dans lequel le procédé comprend en outre l'étape de :
d) fourniture directement du condensat de vapeur produit à l'étape c) au désaérateur (59), produisant ainsi une solution aqueuse appropriée pour produire de la vapeur ayant une teneur en oxygène inférieure à 20 ppb.

2. Procédé selon la revendication 1, dans lequel la solution aqueuse appropriée pour produire de la vapeur d'eau a une teneur en oxygène dans la plage de 7 ppb à moins de 20 ppb.

3. Procédé selon l'une quelconque des revendications 1 à 2, comprenant en outre l'étape de :
e) réutilisation de la solution d'absorption de dioxyde de carbone régénérée produite à l'étape c) pour absorber du dioxyde de carbone supplémentaire dans l'unité d'absorption de dioxyde de carbone (56).

4. Procédé selon l'une quelconque des revendications 1 à 3, comprenant en outre l'étape de :
f) production de vapeur à partir de la solution aqueuse produite par l'étape d).

5. Procédé selon l'une quelconque des revendications 1 à 4, dans lequel la solution d'absorption de dioxyde de carbone comprend environ 30 % de carbonate de potassium, éventuellement partiellement ou complètement converti en bicarbonate de potassium.

6. Procédé selon la revendication 5, dans lequel la solution d'absorption de dioxyde de carbone comprend environ 30 % de carbonate de potassium, environ 5 % de bicarbonate de potassium, environ 0,5 % de diéthanolamine et environ 0,5 % de glycine.

7. Procédé selon l'une quelconque des revendications 1 à 6, comprenant en outre les étapes de :
g) élimination de soufre d'une charge de gaz naturel dans une unité d'élimination du soufre (11) pour produire une charge de gaz naturel essentiellement exempte de soufre ;
h) conversion de la charge de gaz naturel essentiellement exempte de soufre obtenue à l'étape g), à l'aide de vapeur d'eau, en un mélange de monoxyde de carbone et d'hydrogène dans un reformeur primaire (19) ;
i) éventuellement, augmentation de la conversion de la charge de gaz naturel essentiellement exempte de soufre, en utilisant de l'oxygène, en un mélange de monoxyde de carbone et d'hydrogène réalisé dans le reformeur primaire (19) à l'étape h), dans un reformeur secondaire (53) ;
j) conversion du mélange de monoxyde de carbone et d'hydrogène obtenu à l'étape h), ou éventuellement à l'étape i), en un mélange de dioxyde de carbone et d'hydrogène dans une unité de conversion par déplacement (24) ;
k) introduction du mélange gazeux de dioxyde de carbone et d'hydrogène généré à l'étape j) dans l'unité d'absorption de dioxyde de carbone (56), produisant ainsi de l'hydrogène essentiellement exempt de dioxyde de carbone ; et
l) introduction de l'hydrogène produit à l'étape k) dans une unité de méthanation (32) pour convertir des quantités restantes de monoxyde de carbone et de dioxyde de carbone en méthane.

8. Procédé selon la revendication 7, comprenant en outre l'étape de :
m) alimentation du mélange d'hydrogène et de méthane obtenu à l'étape I) dans un convertisseur d'ammoniac (36).

9. Système de traitement d'un condensat de vapeur généré par un régénérateur à haute pression pour régénérer une solution d'absorption de dioxyde de carbone, comprenant :
une unité d'élimination de dioxyde de carbone (28) comprenant :
une unité d'absorption de dioxyde de carbone (56) ;
un système d'échange de chaleur comprenant un régénérateur à haute pression (57) comprenant la solution à régénérer et un rebouilleur chauffé à la vapeur (58) pour échanger de la chaleur de la vapeur dans le rebouilleur chauffé à la vapeur (58) avec la solution d'absorption de dioxyde de carbone comprenant le dioxyde de carbone absorbé dans le régénérateur à haute pression (57) ;
un régénérateur basse pression ; et
un désaérateur (59) destiné à produire une solution aqueuse ayant une teneur en oxygène inférieure à 20 ppb, comprenant une entrée et une sortie,
dans lequel le régénérateur à haute pression (57) peut être exploité à une pression dans la plage de 1,0 à 1,2 kg/cm² pour régénérer une solution d'absorption de dioxyde de carbone comprenant du dioxyde de carbone absorbé ;
dans lequel le régénérateur basse pression peut être exploité à une pression inférieure à 0,2 kg/cm² pour traiter le dioxyde de carbone régénéré sortant du régénérateur à haute pression (57) ;
dans lequel le rebouilleur chauffé à la vapeur (58) comprend une entrée (60) pour fournir de la vapeur basse pression à une pression dans la plage de 3,2 à 3,5 kg/cm² au régénérateur à haute pression (57) et une sortie (61) pour un condensat de vapeur, produit par l'échange de la chaleur de la vapeur dans le rebouilleur chauffé à la vapeur avec le régénérateur à haute pression ; et
dans lequel l'entrée (60) du désaérateur (59) est en communication fluidique directe avec la sortie (61) du rebouilleur chauffé à la vapeur (58).

10. Système selon la revendication 9, comprenant en outre un moyen pour recycler la solution d'absorption de dioxyde de carbone régénérée régénérée dans le régénérateur à haute pression (57).

11. Système selon l'une quelconque des revendications 9 à 10, comprenant en outre des moyens pour produire de la vapeur (62) ayant une teneur en oxygène dans la plage de 7 ppb à moins de 20 ppb à partir de la solution aqueuse produite dans le désaérateur (59), dans lequel les moyens pour produire de la vapeur (62) sont en communication fluidique directe avec le désaérateur (59).

12. Système selon l'une quelconque des revendications 9 à 11, dans lequel le système est la section de production d'hydrogène d'une unité de production d'ammoniac (71), comprenant en outre :
une unité d'élimination de soufre (11) pour éliminer du soufre d'une charge de gaz naturel ;
un reformeur primaire (19) pour convertir une charge de gaz naturel essentiellement exempte de soufre en un mélange de monoxyde de carbone et d'hydrogène ;
éventuellement, un reformeur secondaire (53) pour augmenter la conversion de la charge de gaz naturel essentiellement exempte de soufre en un mélange de monoxyde de carbone et d'hydrogène obtenu dans le reformeur primaire (19) ; et
une unité de conversion par déplacement (24) pour convertir le mélange de monoxyde de carbone et d'hydrogène produit dans le reformeur primaire (19) ou, éventuellement, dans le reformeur secondaire (53) ; et
une unité de méthanation (32) pour convertir des quantités restantes de monoxyde de carbone et de dioxyde de carbone en méthane ;
dans lequel :
l'unité d'élimination de soufre (11) est en communication fluidique directe avec le reformeur primaire (19) ;
le reformeur primaire (19) est en communication fluidique directe avec l'unité de conversion par déplacement (24) en l'absence d'un reformeur secondaire (53) et est en communication fluidique directe avec le reformeur secondaire lorsqu'un reformeur secondaire (53) est présent ;
le reformeur secondaire (53), lorsqu'il est présent, est en communication fluidique directe avec l'unité de conversion par déplacement (24) ; et
l'unité de conversion par déplacement (24) est en communication fluidique directe avec l'unité d'absorption de dioxyde de carbone (56) ; et
l'unité de méthanation (32) est en communication fluidique directe avec l'unité de conversion par déplacement (24).

13. Système selon la revendication 12, comprenant en outre un convertisseur d'ammoniac (36) en communication fluidique directe avec l'unité de méthanation (32).

14. Utilisation du système pour la récupération de chaleur selon l'une quelconque des revendications 9 à 13 pour la réalisation du procédé pour la récupération de chaleur selon l'une quelconque des revendications 1 à 7.

15. Procédé de refonte d'un système existant pour la récupération de chaleur comprenant :
une unité d'élimination de dioxyde de carbone (28) comprenant :
une unité d'absorption de dioxyde de carbone (56) ;
un système d'échange de chaleur comprenant un régénérateur à haute pression (57) destiné à régénérer une solution d'absorption de dioxyde de carbone comprenant du dioxyde de carbone absorbé ; et un rebouilleur chauffé à la vapeur (58) comprenant une entrée (60) et une sortie (61), pour l'échange de la chaleur de la vapeur dans le rebouilleur chauffé à la vapeur (58) avec la solution d'absorption de dioxyde de carbone comprenant du dioxyde de carbone absorbé dans le régénérateur à haute pression (57), produisant ainsi un condensat de vapeur et une solution d'absorption de dioxyde de carbone régénérée ;
un régénérateur à basse pression, pouvant être exploité à une pression inférieure à 0,2 kg/cm², pour un traitement ultérieur de la solution d'absorption de dioxyde de carbone régénérée sortant du régénérateur à haute pression ;
un dispositif de strippage de condensat de procédé (63) pour le strippage du condensat produit par le rebouilleur chauffé à la vapeur (58) comprenant une entrée (65) en communication fluidique directe avec la sortie (61) du rebouilleur chauffé à la vapeur (58) et une sortie (66) ;
une unité de déminéralisation d'eau (64) comprenant une entrée (67) en communication fluidique directe avec la sortie (66) du dispositif de strippage de condensat de procédé (63) et une sortie (68) ; et
un désaérateur (59) pour produire une solution aqueuse ayant une teneur en oxygène inférieure à 5 ppm, en particulier inférieure à 20 ppb, comprenant une entrée (69) en communication fluidique directe avec la sortie (68) de l'unité de déminéralisation d'eau (64) et une sortie (70) ;
en un système selon l'une quelconque des revendications 8 à 13, comprenant les étapes de :
(I) déconnexion de manière fluidique de la sortie (61) du rebouilleur chauffé à la vapeur (58) de l'entrée (65) du dispositif de strippage de condensat de procédé (63) ;
(II) déconnexion de manière fluidique de l'entrée (67) de l'unité de déminéralisation d'eau (64) de la sortie (66) du dispositif de strippage de condensat de procédé (63) ; et
(III) connexion de manière fluidique de la sortie (61) du rebouilleur chauffé à la vapeur (58) à l'entrée (69) du désaérateur (59).
